# EUROPÄISCHE PATENTSCHRIFT

(11) **EP 0 729 979 B1**
(45) Veröffentlichungstag und Bekanntmachung des Hinweises auf die Patenterteilung: **10.03.1999**
(21) Anmeldenummer: 95120506.1
(22) Anmeldetag: 23.12.1995
(51) Int. Cl.: C08F 20/12, C08F 2/44

(54) **Giessharze auf Basis von olefinisch ungesättigten Silanen und Metallsäureestern**
Casting resins based on olefinic unsaturated silanes and esters of metal acids
Résines à couler à base de silanes insaturés oléfiniquement et esters de métal acides

(30) Priorität: 04.02.1995 DE 19503713
(43) Veröffentlichungstag der Anmeldung: 04.09.1996
(73) Patentinhaber: E.I. DU PONT DE NEMOURS & COMPANY INCORPORATED, Wilmington Delaware 19898 (US)
(72) Erfinder: Peeters, Hermann, Dr., D-53721 Siegburg (DE); Bastin, Birgit, D-53842 Troisdorf (DE); Matthes, Reinhard, Dr., D-51427 Bergisch Gladbach (DE)
(74) Vertreter: von Kreisler, Alek, Dipl.-Chem.

(56) Entgegenhaltungen:
- US-A- 3 647 729

## Beschreibung

Die vorliegende Erfindung betrifft Gießharze auf der Basis von härtbaren Acryl- oder Methacrylsäureestern und feinteiligen anorganischen Füllstoffen, die als Haftvermittler Organosiliziumverbindungen und Metallsäureester enthalten, ein Verfahren zu deren Herstellung sowie ihre Verwendung.

Gießharze auf Basis von härtbaren Acryl- und Methacrylsäureestern und feinteiligen Füllstoffen - im folgenden auch als ungesättigte Gießharze bezeichnet - die als Haftvermittler Organosiliziumverbindungen mit eine oder mehreren ethylenisch ungesättigten Gruppen enthalten, sind in der Europäischen Patentschrift Nr. 0 107 764 beschrieben. Zur Verbesserung der Produkt- und Verarbeitungseigenschaften, wie z. B. Viskosität, Dispergierung, werden die Organosiliziumverbindungen mit Metallsäureestern oder -chelaten von Metallen der IV. oder V. Nebengruppe des Periodensystems versetzt, so daß sich synergistische Effekte ergeben. Einschränkend bezüglich der Auswahl der Metallsäureester und -chelate gilt hier, daß diese in dem ungesättigten Gießharzsystem löslich und verträglich sein müssen, um wirksam zu sein. Um der Forderung nach Metallsäureestern/-chelaten mit niedriger Farbzahl und einer Registrierung in chemischen Substanzlisten, z. B. EINECS, zu entsprechen, ergeben sich entscheidende Nachteile bei der Produktauswahl. Metallchelate des Titans sind häufig gefärbt oder neigen zur Vergilbung und erfüllen damit nicht die Anforderungen an farblose Systeme.

Der vorliegenden Erfindung lag daher die Aufgabe zugrunde, einen Metallsäureester oder -chelat oder auch einen weiteren Zusatz zu finden, die gemeinsam mit Organosiliziumverbindungen in ungesättigten Gießharzen eine Verbesserung der Farbzahl des Produktes bewirken.

Zirkoniumsäureester und -chelate erscheinen zunächst aufgrund der Reaktivität, der weitgehenden Farblosigkeit und der Nichtvergilbung geeignet. Jedoch ist Zirkoniumacetylacetonat (Zr-ACA) als solches in den eingesetzten Acryl- und Methacrylsäureestern, beispielsweise Methylmethacrylat so wenig löslich, daß diese Maßnahme nicht zum gewünschten Erfolg führt.

Die gestellte Aufgabe wird erfindungsgemäß entsprechend den Angaben der Patentansprüche gelöst.

So wird durch Zugabe einer begrenzten Menge an Wasser zu dem Zr-ACA-haltigen, ungesättigten Gießharz ein stabiles, hochwirksames Haftvermittler- und Dispergiermittelsystem erhalten. Vorzugsweise werden für die Zr-ACA-haltigen Gießharzzusammensetzungen 30 bis 75 Gew.-% Wasser, besonders vorzugsweise 40 bis 60 Gew.-% Wasser, bezogen auf die Menge an Zr-ACA, eingesetzt. Dieses System zeigt sogar eine höhere Effizienz als beispielsweise ein optimiertes Marktprodukt auf Basis von 3-Methacryloxypropyltrimethoxysilan und einem Zirkoniumester, insbesondere dadurch, daß die viskositätsreduzierende Wirkung fast sofort erzielt wird. Überraschend ist die Erfindung auch deshalb, weil trotz des Wasserzusatzes in dem vorgegebenen Mengenbereich die Organosiliziumverbindung stabil bleibt und nicht eine bei diesen Verbindungen zu erwartende Polykondensation eingeht. Das ist auch überraschend, weil im allgemeinen Metallsäureester/-chelate die Reaktion der siliziumfunktionellen Gruppe der Silane katalysieren und zu einer schnellen Polykondensation in Gegenwart von Wasser führen. Bei einem Unterschuß an Wasser ist das Zirkoniumacetylacetonat unlöslich, bei einem Überschuß an Wasser erfolgt schon nach kurzer Zeit die Bildung eines unlöslichen und unreaktiven Polysiloxans aus der im Gießharz enthaltenen Organosiliziumverbindung.

Die erfindungsgemäßen Gießharzzusammensetzungen, d. h. die sogenannten ungesättigten Gießharze, enthalten im allgemeinen die Komponenten Harz (Acryl- und Methacrylsäureester), feinteiligen Füllstoff, mindestens eine Organosiliziumverbindung, Zr-ACA und Wasser; es können aber auch noch andere Zusatzstoffe in der Gießharzzusammensetzung enthalten sein, beispielsweise Vernetzer, Dispergierhilfsmittel, Farbpigmente, Farbstoffe, Verstärkerstoffe.

Die Organosiliziumverbindung und das Zr-ACA können im allgemeinen dem Harz oder dem Gießharz als Additiv zugegeben werden. Die Menge an Organosiliziumverbindung beträgt vorzugsweise 0,2 bis 4 Gew.-%, bezogen auf den feinteiligen Füllstoff. Die Menge Zr-ACA beträgt vorzugsweise 0,05 bis 1 Gew.-%, bezogen auf den feinteiligen Füllstoff in der Gießharzzusammensetzung. Das Gewichtsverhältnis von Organosiliziumverbindung zu Zr-ACA kann 10 : 1 bis 1 : 1 betragen.

In der erfindungsgemäßen Gießharzzusammensetzung wird geeigneterweise ein Gewichtsanteil von Wasser, bezogen auf Zr-ACA, von 30 bis 75 Gew.-% eingesetzt. Durch diesen Zusatz wird das ansonsten unlösliche Zr-ACA in dem Harz oder Gießharz gut löslich, ohne daß gleichzeitig das Silan eine Polykondensation eingeht. Das System aus Organosiliziumverbindung, Zr-ACA und Wasser in dem Harz ist in der Regel mindestens 3 Monate stabil. Die Zubereitung des Zr-ACA's mit Wasser kann z. B. durch Mischen des festen Zr-ACA's mit Wasser erfolgen, wobei ein weiterhin als Feststoff gut handhabbares Produkt erhalten wird, durch Zugabe des Wassers zu der Suspension des Zr-ACA's in dem Harz oder Gießharz oder durch Zugabe des Wassers zum Harz vor Einbringen des Zr-ACA's. Bei geringeren Wassermengen als 30 Gew.-%, bezogen auf das eingesetzte Zr-ACA bleibt das Zr-ACA üblicherweise ungelöst. Bei größeren Wassermengen als 75 Gew.-%, bezogen auf das eingesetzte Zr-ACA, erfolgt nach einer Zeit von ca. 3 bis 4 Stunden eine Trübung des Gemisches aus Harz, Zr-ACA und Organosiliziumverbindung unter Bildung unwirksamer Polysiloxane.

Die erfindungsgemäße Zusammensetzung aus Organosiliziumverbindung, Zr-ACA und Wasser bewirkt in der Gießharzzusammensetzung eine deutliche Erniedrigung der Viskosität gegenüber dem unmodifizierten Gießharz und eine Verbesserung der physikalischen Eigenschaften.

Die in der erfindungsgemäßen Gießharzzusammensetzung enthaltenen Organosiliziumverbindungen enthalten ihrerseits eine oder mehrere ethylenisch ungesättigte Gruppen, - sie werden hier auch als ungesättigte Organosilane bezeichnet. Dabei handelt es sich vorzugsweise um Di- und Trialkoxysilane, deren organofunktioneller Rest eine CC-Doppelbindung enthält. Dieser Rest ist in der Regel über ein Kohlenstoffatom mit dem Siliziumatom verbunden, wobei dieses Kohlenstoffatom bereits mit dem nächsten Kohlenstoffatom mit einer Doppelbindung verknüpft sein kann, wie z. B. in den Vinyltrialkoxysilanen. Die Doppelbindung kann jedoch auch über ein oder mehrere Kohlenstoffatome von dem Siliziumatom getrennt sein, wie z. B. in den Allyltrialkoxysilanen oder den 3-Methacryloxypropyltrialkoxysilanen. Auch die korrespondierenden Dialkoxysilane können eingesetzt werden. Die Alkoxygruppe der ungesättigten Organosilane hat vorzugsweise 1 bis 4 C-Atome, deren Kohlenstoffkette ggf. durch ein Ethersauerstoffatom unterbrochen sein kann.

Beispiele für solche ungesättigten Organosilane sind: Vinyltrimethoxysilan, Vinyltriethoxysilan, Vinyltris(methoxyethoxysilan), Vinylmethyldimethoxysilan, 3-Methacryloxypropyltrimethoxysilan, 3-Methacryloxypropyltriethoxysilan, 3-Methacryloxypropylmethyldimethoxysilan oder 3-Acryloxypropyltrimethoxysilan.

Die Harzkomponente der erfindungsgemäßen Gießharzzusammensetzung ist im allgemeinen ein härtbares Acrylharz, wobei unter einem Acrylharz flüssige Polymere der gegebenenfalls in α-Stellung methyl- oder ethylsubstituierten Acrylsäureester verstanden werden sollen. Die Esterkomponente kann dabei von aliphatischen oder aromatischen Alkoholen mit 1 bis 18 Kohlenstoffatomen abgeleitet und gegebenenfalls durch ein Sauerstoffatom unterbrochen sein. Diese flüssigen Polymere können gegebenenfalls ein weiteres festes, nicht mehr vernetzendes Polymer aus der gleichen Gruppe gelöst oder dispergiert enthalten. Solche Harze oder Harzgemische, die als Komponenten für Gießmassen eingesetzt werden können, sind an sich bekannt, ebenso die Härtung. Ein Beispiel ist ein Methylmethacrylatharz.

Das Gießharz enthält ferner Füllstoffe in Form von feinverteilten Partikeln, geeigneterweise beträgt die Korngröße maximal 100 µm. Die bevorzugten Korngrößenbereiche liegen zwischen > 0 und 60 µm, besonders vorzugsweise zwischen > 0 und 40 µm, ganz besonders vorzugsweise zwischen > 0 und 10 µm; eine ganz besonders gute Wirksamkeit zeigt die erfindungsgemäße Gießharzzusammensetzung bei Füllstoffen im Korngrößenbereich zwischen > 0 bis 10 µm.

Der Füllstoff kann natürlicher oder synthetischer Herkunft sein. Er sollte eine dem Anwendungszweck angepaßte Härte besitzen. Füllstoffe natürlicher Herkunft sind z. B. Mineralien wie Aluminiumoxide, Siliziumdioxid in den verschiedenen Modifikationen der Silikate, Alumosilikate, Carbonate, Carbide, Oxide. Diese Stoffe können auch durch an sich bekannte Verarbeitungsprozesse modifiziert sein. Als Beispiel für solche Füllstoffe seien genannt: Quarzmehl, Kaolin, Glimmer, Talkum, Tonerde, Kreide, Kalkstein, Dolomit, Gips, Bariumsulfat, Beispiele für synthetisch hergestellte Füllstoffe sind Glasmehl, Schlackenasche, feinverteilte synthetische Siliziumoxide. Die erfindungsgemäßen Gießharzzusammensetzungen können im allgemeinen zwischen 20 Gew.-% und 80 Gew.-% feinteilige Füllstoffe enthalten. Vorzugsweise liegt der Anteil der Füllstoffe in dem fertigen Gießharz zwischen 50 und 70 Gew.-%. Die Füllstoffe liegen in der erfindungsgemäßen Gießharzzusammensetzung gleichmäßig verteilt und im wesentlichen frei von Agglomerationen vor.

Zusätzlich zu den obengenannten Füllstoffen können die erfindungsgemäßen Gießharze noch faserförmige Verstärkerstoffe oder Füllstoffe enthalten, die die Bedingungen der Feinkörnigkeit nicht zu erfüllen brauchen. Zu den Faserstoffen zählen beispielsweise Glasfasern oder Steinfasern, zu den Füllstoffen z. B. Sand, der gegebenenfalls vorbehandelt ist.

Falls gewünscht, können die erfindungsgemäßen Gießharze mit Pigmenten und/oder Farbstoffen eingefärbt werden. Beispiele hierfür sind: Eisenoxide, Titandioxid, Blancfix, Zinkweiß, Ultramarinblau, Ruß.

Die Herstellung der erfindungsgemäßen flüssigen Harze erfolgt in an sich bekannter Weise, wie z. B. in der DE-OS 24 49 656 beschrieben. Im allgemeinen werden zunächst Zr-ACA und Wasser einem flüssigen, ungesättigten Harz, d. h. einer Acryl- und/oder Methylmethacrylat-haltigen Grundmasse, untergemischt und geeigneterweise im Anschluß daran die weiteren Additive und/oder die Füllstoffe eindispergiert. Das vorgelegte Harz kann dabei bereits den Härtungskatalysator enthalten, vorzugsweise in weitgehend homogener Verteilung, besonders wenn das Gießharz durch Wärmeeinwirkung ausgehärtet werden soll. Im allgemeinen ist es zweckmäßig, den Härtungskatalysator und gegebenenfalls die Beschleuniger erst kurz vor dem Aushärten der Masse unterzumischen und daraufhin das gewünschte Gußstück herzustellen.

Verwendung finden die erfindungsgemäßen Gießharze z. B. für den Bereich Sanitärartikel, wie Waschbecken, Brausetassen, Spülen oder WC-Becken oder z. B. für Formkörper in der Bauindustrie, wie Maschinenfundamente, Maschinenbetten oder Behälter.

Die Erfindung wird durch die folgenden Beispiele näher erläutert:

### Beispiel 1

### Auswahl der geeigneten Wassermenge

Zu 40 g Methylmethacrylat werden die angegebenen Mengen an Zirkoniumacetylacetonat (Zr-ACA, Hüls AG) und 3-Methacryloxypropyltrimethoxysilan (DYNASYLAN MEMO, Hüls AG) unter Rühren bei Raumtemperatur zugegeben. Die Dispersion wird mit Wasser versetzt und gelagert.

| | 1A | 1B | 1C | 1D | 1E | 1F | 1G |
|---|---|---|---|---|---|---|---|
| 3-Methacryloxypropyltrimethoxysilan | 30,8 g | 30,2 g | 29,1 g | 28,1 g | 27,2 g | 22,9 g | 16,0 g |
| Zr-ACA | 7,7 g | 7,5 g | 7,3 g | 7,0 g | 6,8 g | 11,4 g | 16,0 g |
| Wasser | 1,5 g | 2,3 g | 3,6 g | 4,9 g | 6,0 g | 5,7 g | 8,0 g |

| Lagerung bei Raumtemperatur Beurteilung nach ... | | | | | | | |
|---|---|---|---|---|---|---|---|
| 1 Stunde | trüb, heterogen | klar | klar | klar | klar | klar | klar |
| 24 Stunden | trüb | klar | klar | klar | 2 Phasen | klar | klar |
| 3 Monaten | trüb, Kristalle | klar | klar | klar | 2 Phasen | klar | klar |

### Beispiel 2

### Viskositätsbeeinflussung

Zu 75 g einer Lösung eines Methylmethacrylathomopolymeren in Monomer [Plexit MV 51/Methylmethacrylat (3:1) - Röhm GmbH] werden 1,5 Gew.-%, berechnet auf Füllstoff, an Additiv-Wirkstoff zugegeben. Dann werden 75 g Quarzmehl (Korngrößenbereich 0-40 µm) mit einem Körbchenrührer bei 1 200 Upm im Verlauf von ca. 10 min eindispergiert und nach Lagerung bei 20 °C die Viskosität mit einem Brookfield-Viskosimeter (Spindel 5) bei einer Schergeschwindigkeit von 10 Upm gemessen.

| Nr. | Additiv | Menge | Viskosität [mPa·s] nach | | |
|---|---|---|---|---|---|
| | | | 1 h | 4 h | 24 h |
| 2 A | - | - | 8 200 | 8 100 | 8 100 |
| 2 B | 3-Methacryloxypropyltrimethoxysilan (MEMO) | 1,13 g | 7 200 | 5 200 | 3 400 |
| 2 C | Zubereitung MEMO/Zr-ACA/Wasser (8:2:1 Gew.-Teile) | 1,13g | 3 400 | 3 200 | 3 200 |
| 2 D | Zubereitung MEMO/Zr-ACA/Wasser/Methylmethacrylat (8:2:1:11 Gew.-Teile) | 2,26 g | 3 200 | 3 200 | 3 200 |
| 2 E | DYNASYLAN 5105-1K (Zubereitung aus MEMO und Tetrabutylzirkonat, 50 %ig in Methylmethacrylat) -Handelsprodukt der Hüls AG | 2,26 g | 3 800 | 3 400 | 3 200 |

### Beispiel 3

### Haftverbesserung

Zu 175 g einer Lösung eines Methylmethacrylathomopolymeren in Monomer [Plexit MV 51/Methylmethacrylat (3:1) - Röhm GmbH] werden 1,5 Gew.-%, berechnet auf Füllstoff an Additiv-Wirkstoff zugegeben. Dann werden 175 g Quarzmehl (Korngrößenbereich 0-40 µm) und anschließend 1,8 g Ultramarinblau zur Einfärbung mit einem Körbchenrührer bei 1 200 Upm im Verlauf von ca. 10 min eindispergiert. Nach 2stündiger Lagerung bei 20 °C wird die Viskosität wie in Beispiel 2 bestimmt.

Nach einer Standzeit von insgesamt 5 Stunden werden 1,75 g eines Peroxids und 1,4 g eines 25 %igen Beschleunigers eingerührt. Dann werden Platten der Maße 200x200X4 mm gegossen, die innerhalb von 30 min bei Raumtemperatur aushärten. Anschließend erfolgt noch eine Nachhärtung von 14 Stunden bei 80 °C.

| Nr. | Additiv | Menge [g] | Viskosität [mPa·s] | Biegefestigkeit [N/mm²] | | Aussehen nach Belastung |
|---|---|---|---|---|---|---|
| | | | | unbelastet | 16 Std. Kochwasserbelastung | |
| 3 A | - | - | 10 200 | 88,5 | 45,2 | starke Ausweißung |
| 3 B | 3-Methacryloxypropyltrimethoxysilan MEMO) | 2,66 | 5 800 | 130,2 | 109,7 | schwache Ausweißung |
| 3 C | Zubereitung MEMO/Zr-ACA/Wasser/Methylmethacrylat (8:2:1:11 Gew.-Teile) | 5,32 | 2 700 | 132,3 | 114,9 | keine Ausweißung |
| 3 D | DYNASYLAN 5105-1K (Zubereitung aus MEMO und Tetrabutylzirkonat, 50 %ig in Methylmethacrylat) - Handelsprodukt der Hüls AG | 5,32 | 2 600 | 131,4 | 108,5 | keine Ausweißung |
| 3 E | Abmischung Zr-ACA/Wasser 2:1 | 2,66 | 2 800 | 86,9 | 70,7 | starke Ausweißung |

## Patentansprüche

1. Gießharze auf der Basis von härtbaren Acryl- und/oder Methacrylsäureestern und feinteiligen anorganischen Füllstoffen, die als Haftvermittler Organosiliziumverbindungen und Metallsäureester enthalten,
dadurch gekennzeichnet,
daß die Gießharzzusammensetzung Zirkoniumacetylacetonat und Wasser enthält.

2. Gießharze nach Anspruch 1,
dadurch gekennzeichnet,
daß in der Gießharzzusammensetzung 0,2 bis 0,4 Gew.-% Organosiliziumverbindungen, bezogen auf den Anteil feinteiliger Füllstoffe, enthalten sind.

3. Gießharze nach den Ansprüchen 1 und 2,
dadurch gekennzeichnet,
daß in der Gießharzzusammensetzung 0,05 bis 1 Gew.-% Zirkoniumacetylacetonat, bezogen auf den Anteil feinteiliger Füllstoffe, enthalten sind.

4. Gießharze nach den Ansprüchen 1 bis 3,
dadurch gekennzeichnet,
daß in der Gießharzzusammensetzung das Gewichtsverhältnis von Organosiliziumverbindungen zu Zirkoniumacetylacetonat 10 : 1 bis 1 : 1 beträgt.

5. Gießharze nach den Ansprüchen 1 bis 4,
dadurch gekennzeichnet,
daß für die Gießharzzusammensetzung 30 bis 75 Gew.-% Wasser, bezogen auf die Menge an Zirkoniumacetylacetonat, eingesetzt werden.

6. Gießharze nach den Ansprüchen 1 bis 5,
dadurch gekennzeichnet,
daß in der Gießharzzusammensetzung 20 bis 80 Gew.-% feinteilige Füllstoffe enthalten sind.

7. Verfahren zur Herstellung eines Gießharzes nach den Ansprüchen 1 bis 6,
dadurch gekennzeichnet,
daß man eine Acryl- und/oder Methylmethacrylat-haltige Grundmasse mit Zirkoniumacetylacetonat sowie Wasser vermischt und nachfolgend weitere Additive und/oder Füllstoffe eindispergiert.

8. Verwendung der Gießharze nach den Ansprüchen 1 bis 6 sowie der nach Anspruch 7 hergestellten Gießharze im Bereich Sanitärartikel.

9. Verwendung der Gießharze nach den Ansprüchen 1 bis 6 sowie der nach Anspruch 7 hergestellten Gießharze für Formkörper in der Bauindustrie.

## Claims

1. Casting resins on the basis of curable acrylic and/or methacrylic esters and finely divided inorganic fillers containing organosilicon compounds and metallic-acid esters as adhesion promoters, characterized in that the casting resin composition comprises zirconium acetylacetonate and water.

2. The casting resins according to claim 1, characterized in that
the casting resin composition comprises of from 0.2 to 0.4 % by weight of organosilicon compounds, based on the amount of finely divided fillers.

3. The casting resins according to claims 1 and 2, characterized in that
the casting resin composition comprises of from 0.05 to 1 % by weight of zirconium acetylacetonate, based on the amount of finely divided fillers.

4. The casting resins according to claims 1 to 3, characterized in that
in the casting resin composition the weight ratio of organosilicon compounds to zirconium acetylacetonate is from 10:1 to 1:1.

5. The casting resins according to claims 1 to 4, characterized in that
of from 30 to 75 % by weight of water, based on the amount of zirconium acetylacetonate, are used for the casting resin composition.

6. The casting resins according to claims 1 to 5, characterized in that
the casting resin composition comprises of from 20 to 80 % by weight of finely divided fillers.

7. A process for manufacturing a casting resin according to claims 1 to 6, characterized in that
an acrylate and/or methyl methacrylate containing basic material is mixed with zirconium acetylacetonate and water and additional additives and/or fillers are dispersed in subsequently.

8. Use of the casting resins according to claims 1 to 6 and the casting resins manufactured according to claim 7 in the field of sanitary articles.

9. Use of the casting resins according to claims 1 to 6 and the casting resins manufactured according to claim 7 for moulded articles in the building industry.

## Revendications

1. Résine moulée à base d'esters d'acide acrylique et/ou méthacrylique durcissables et d'une charge inorganique finement divisée, qui en tant que liant contient des dérivés organiques du silicium et des esters d'acide métallique, caractérisée en ce que, la composition de résine moulée contient de l'acétylacétonate de zirconium et d'eau.

2. Résine moulée selon la revendication 1, caractérisée en ce que la composition de résine moulée contient 0,2 à 0,4 % en poids de dérivés organiques du silicium, exprimée par rapport à la proportion de charge minérale finement divisée.

3. Résine moulée selon la revendication 1 ou 2, caractérisée en ce que la composition de résine moulée contient de 0,05 à 1 % en poids d'acétylacétonate de zirconium, exprimée par rapport à la proportion de charge minérale finement divisée.

4. Résine moulée selon la revendication 1 à 3, caractérisée en ce que dans la composition de résine moulée, la proportion pondérale des dérivés organiques du silicium par rapport à l'acétylacétonate s'élève à 10/1 à 1/1.

5. Résine moulée selon l'une quelconque des revendications 1 à 4, caractérisée en ce qu'on ajoute à la composition de résine moulée de 30 à 75 % en poids d'eau, exprimée par rapport à la quantité d'acétylacétonate de zirconium.

6. Résine moulée selon l'une quelconque des revendications 1 à 5, caractérisée en ce que la composition de résine moulée contient de 20 à 80 % en poids de charge finement divisée.

7. Procédé de fabrication d'une résine moulée selon l'une quelconque des revendications 1 à 6, caractérisé en ce qu'on mélange une masse de base contenant de l'acrylate et/ou du méthacrylate de méthyle avec de l'acétylacétonate de zirconium et de l'eau et ensuite on disperse en son sein d'autres additifs et/ou charges.

8. Utilisation de la résine moulée selon l'une quelconque des revendications 1 à 6, ainsi que de la résine moulée obtenue selon la revendication 7, dans le domaine des articles sanitaires.

9. Utilisation de la résine moulée selon l'une quelconque des revendications 1 à 6 ainsi que les résines moulées fabriquées selon la revendication 7, pour des articles dans le domaine de l'industrie du bâtiment.
